# EUROPEAN PATENT SPECIFICATION

(11) **EP 1 531 029 B1**
(45) Date of publication and mention of the grant of the patent: **19.03.2008**
(21) Application number: 04026933.4
(22) Date of filing: 12.11.2004
(51) Int. Cl.: B25J 19/00

(54) **Cable distribution and support equipment for sensor in robot system**
Sensorkabelverteilungs- und Stützvorrichtung in einem Roboter
Dispositif de répartition et de support de cables de capteur dans un robot

(30) Priority: 17.11.2003 JP 2003387069
(43) Date of publication of application: 18.05.2005
(73) Proprietor: Fanuc Ltd, Minamitsuru-gun, Yamanashi 401-0597 (JP)
(72) Inventor: Inoue, Toshihiko, Fujiyoshida-shi Yamanashi 403-0017 (JP); Tamura, Toshinari, Hagiwara Gotenba-shi Shizuoka 412-0042 (JP); Aizawa, Atsushi, Fuefuki-shi Yamanashi 406-0815 (JP)
(74) Representative: Schmidt, Steffen J.

(56) References cited:
- EP-A- 0 287 062
- WO-A-03/015998
- GB-A- 950 873
- JP-A- 60 217 094
- US-A- 4 819 978

## Description

### BACKGROUND OF THE INVENTION

### 1. Field of the Invention

The present invention relates to a robot system comprising a cable distribution and support equipment for a sensor in.

### 2. Description of the Related Art

To make a robot "intelligent", it is known to mount a visual sensor, force sensor, or other external sensor on the robot. When mounting a visual sensor or force sensor on a robot, a sensor cable connected to the visual sensor or the force sensor is laid in a robot mechanism. When laying the sensor cable in the robot mechanism, it is necessary to prevent the sensor cable from interfering with surrounding objects or an excessive tension being applied to the sensor cable, along with robot motion. For example, in the case where a sensor cable is laid in an articulated robot configured to be able to twist a forearm, consideration is required so that the problem of interference or excessive tension of the sensor cable will not arise during the twisting or revolute motion of the forearm.

To meet this requirement, in the case where a sensor cable is laid in an articulated robot with a twistable forearm, it has been proposed to form the forearm as a hollow structure and to lay the sensor cable inside the forearm through a forearm support provided in a joint between the forearm and an upper arm. In this connection, since the sensor cable connected to a visual sensor, force sensor, or other external sensor is generally provided for a relatively weak signal, a high resistance to noise is also required. For this purpose, it is known to employ a shielded cable for the sensor cable.

On the other hand, in the articulated robot, the other umbilical members, such as control cables for an electric motor for driving the wrist of the robot, are sometimes already laid inside the forearm while being passed through the forearm support. In this connection, a motor control cable is required to be able to move flexibly inside a limited space, so that an individual wire having no cable sheath is generally used as the motor control cable. Therefore, it has been desired to provide distribution and support equipment able to lay the unsheathed, easily damaged individual wires and the sheathed sensor cables without problems.

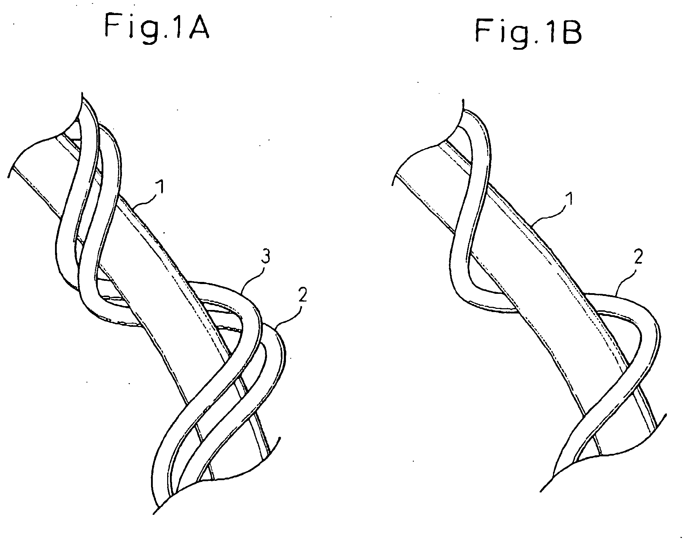

In this regard, the assignee of the present application has proposed in the specification of JP-A-2004 136 371, which has been published after the filing date of the present application, distribution and support equipment for a cable of a camera or a force sensor, which can prevent interference with external equipment around the forearm of a robot. The distribution and support equipment described in the specification will be briefly explained with reference to Figs. 1A and 1B. In the example of Fig. 1A, unsheathed, easily damaged individual wires (i.e., a motor control cable, a hand control cable, etc.) are housed in a protective tube 1 to be laid. On the other hand, a shielded sensor cable 2 (e.g., a twisted-pair signal cable composed of the combination of an image signal cable and a camera control signal cable) and a shielded sensor power cable 3 are wound in a spiral form around the outer circumference of the protective tube 1 to be laid. Due to this, it becomes possible to absorb the torsion of the sensor cable 2 and sensor power cable 3, liable to arise during the twisting or revolute motion of the forearm of the robot. Further, in the example of Fig. 1B, in addition to the above individual wires, an unsheathed sensor power cable is also housed in the protective tube 1, and only the shielded sensor cable 2 is laid along the outer circumference of the protective tube 1. By employing this distribution and support equipment, it is possible to increase the degree of freedom of each cable in the forearm of the robot, so that even if a bending or twisting force acts repeatedly on the camera cable or the force sensor cable due to twisting or revolute motion, of the forearm of the robot, the resultant damage, otherwise applied to the respective cables, can be lightened, and the life of the cables can be effectively Increased.

EP-A-0 287 062 discloses a protective tube reaching into a cavity formed in a hollow forearm of a robot, through which cables for supplying motive power and electric power used for detection purposes are passed.

WO-A-03 015 998 teaches to bundle various cables passed through the forearm of a roboter, including signal cables for sensors.

JP-A-60 217 094 discloses to place a visual sensor on a hand of a robot.

US-A-4-819 978 discloses force sensors and their associated cables, and to place a force sensor on a hand of a robot.

GB-A-950 873 shows to sheath such cables and to use fluorine for insulation purposes.

### SUMMARY OF THE INVENTION

It is an object of the present invention to provide a robot system, where a sensor cable can be accommodated inside a forearm, and where the sensor cable is prevented from being damaged during a robot operation.

To accomplish the above object, the present invention provides a robot system comprising the features of claim 1.

In the above-described robot system, the signal cable may comprise an image signal cable and a control signal cable, provided for a visual sensor.

In this arrangement, at least one of the image signal cable, the control signal cable and the power cable may be covered by at least one of a shield member and a sheath member.

Alternatively, the signal cable may comprise a detection-data transmission signal cable of a strain gauge provided for a force sensor.

In this arrangement, at least one of the detection-data transmission signal cable and the power cable may be covered by at least one of a shield member and a sheath member.

The protective tube may be provided with a cantilever structure having a fixed end designed to be securely joined to a forearm support provided in the robot and a free end designed to be disposed in the cavity of the forearm.

Further, among the umbilical member, at least one of the control cable of the drive motor and the control cable of the hand may be provided with no sheath member; and wherein an insulating member of an individual wire constituting at least one control cable may be formed from a material containing an organic fluorine compound.

### BRIEF DESCRIPTION OF THE DRAWINGS

The above and other objects, features and advantages of the present invention will become more apparent from the following description of preferred embodiments in connection with the accompanying drawings, wherein:
Fig. 1A is an illustration schematically showing an example of cable distribution and support equipment for a sensor in a prior or earlier application;
Fig. 1B is an illustration schematically showing another example of cable distribution and support equipment for a sensor in the prior application;
Fig. 2 is an illustration schematically showing an example of a robot system to which cable distribution and support equipment for a sensor, according to the present invention, can be applied;
Fig. 3A is a front view schematically showing a cable laying route on a robot mechanism, in relation to cable distribution and support equipment for a sensor, according to an embodiment of the present invention;
Fig. 3B is a right side view showing the robot mechanism of Fig. 3A;
Fig. 4A is an enlarged front view showing a part including a forearm of the robot mechanism of Fig. 3A;
Fig. 4B is an enlarged side view showing the part of Fig. 4A;
Fig. 5A is a top view typically showing the internal structure of the forearm of the robot mechanism of Fig. 3A;
Fig. 5B is a right side view showing the internal structure of Fig. 5A;
Fig. 6 is an illustration typically showing the configuration of the sensor cable distribution and support equipment, according to the embodiment of the present invention;
Fig. 7A is a sectional view showing an example of a sensor cable laid by the sensor cable distribution and support equipment of Fig. 6; and
Fig. 7B is a sectional view showing another example of a sensor cable laid by the sensor cable distribution and support equipment of Fig. 6.

### DETAILED DESCRIPTION

The embodiments of the present invention are described below in detail, with reference to the accompanying drawings. In the drawings, the same or similar components are denoted by common reference numerals.

Cable distribution and support equipment for a sensor, according to the present invention, may be preferably applied to a robot system including an articulated robot and a visual sensor or a force sensor (i.e., an external sensor) attached near a wrist of the articulated robot, for laying a sensor cable in a cavity of a forearm, having a hollow structure, of the articulated robot. The sensor cable distribution and support equipment is improved in configuration so as to enable a generally sheathed sensor cable and generally unsheathed other individual wires to be passed together through a forearm support provided in a robot and to be laid in the cavity inside the forearm. Due to this, during the twisting or revolute motion of the forearm of the robot, it is possible to effectively prevent the sensor cable from interfering with surrounding objects or being subjected to excessive tension, and thus to remarkably improve the life of the sensor cable.

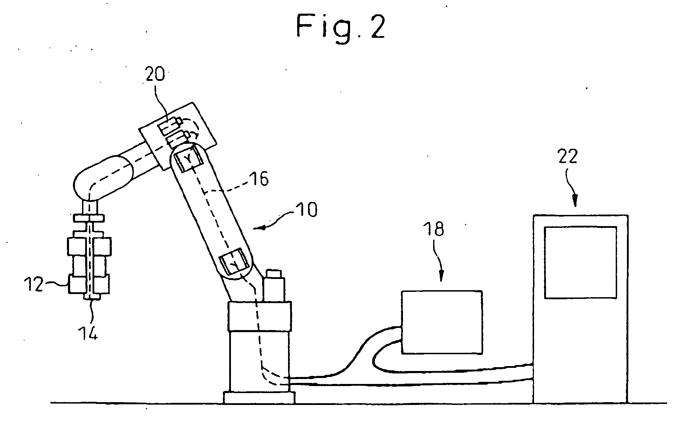

Referring to the drawings, Fig. 2 schematically shows an example of a robot system to which the sensor cable distribution and support equipment, according to the present invention, can be applied. Note that the configuration of the sensor cable distribution and support equipment, explained below, is one for laying in a robot the sensor cable for a visual sensor attached near the wrist of the robot. However, the sensor cable distribution and support equipment, according to the present invention, is not limited to this configuration, and may also be applied for laying in a robot a sensor cable for another external sensor, such as a force sensor, attached near the wrist of the robot.

In the robot system shown in Fig. 2, a hand 12 is attached to the wrist of a robot (i.e., a robot mechanism) 10, and a visual sensor 14 is mounted on the region near the wrist. The visual sensor 14 is connected, through a sensor cable (as explained later) included in a cable member 16, to a sensor controller 18. The sensor cable is comprised of a signal cable set for the visual sensor 14 (i.e., an image signal cable and a control signal cable) and a power cable. The sensor controller 18 includes an image processor for the visual sensor 14. Note that, in the case where a force sensor is mounted instead of the visual sensor 14, a sensor cable connecting the force sensor to the sensor controller 18 is comprised of a signal cable for the force sensor (i.e., a detection-data transmission signal cable of a strain gauge) and a power cable. Also, the sensor controller 18 includes a device for converting the output of a strain gauge built into the force sensor to, e.g., six-axis force components, and so on.

The driving operation of drive motors (e.g., a servo motor 20) provided for respective control axes of the robot mechanism 10 and the driving operation of the hand 12 attached to the wrist are controlled by a robot controller 22. The cables for the driving control (i.e., the control cables of the drive motor and the control cable of the hand) are also included in the cable member 16. Note that the sensor controller 18 may be combined into the robot controller 22.

The cable member 16 may include, in addition to the above various cables for transmitting electrical signals or power, various umbilical members, such as a compressed air hose for driving a pneumatic mechanism, as occasion demands. Note that the term "umbilical member" used in this application is a general term covering cables, hoses, material supply conduits, etc. In general, in an industrial robot, these cables and other umbilical members are preferably laid to be able to move integrally with the robot mechanism (or an arm) for the purpose of avoiding an interference with the peripheral mechanism surrounding the robot.

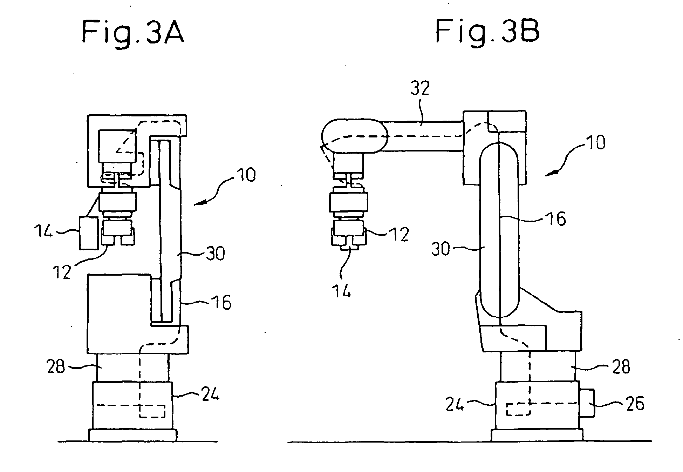

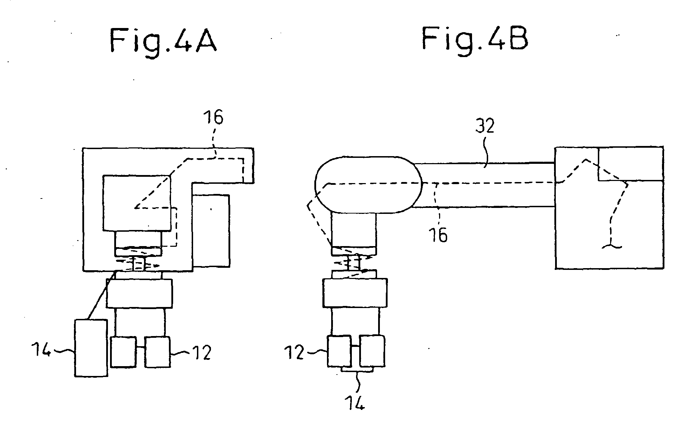

Figs. 3A to 4B schematically show the laying route of the cable member 16 on the robot mechanism 10, in relation to cable distribution and support equipment for a sensor, according to an embodiment of the present invention. The cable member 16, including the sensor cable for the visual sensor 14 or force sensor, the control cable for the hand 12, the control cables for the respective axis drive motors, etc., as described, extends to be laid into the robot mechanism 10 from a control unit, such as the robot controller 22 and the sensor controller 18, through a connector-equipped distribution board 26 placed behind a base 24 of the robot mechanism 10.

The cable member 16 laid into the robot mechanism 10 is passed through a cavity formed inside a swivel body 28 on the base 24. Then, cables partially branched from the control cables of respective axis drive motors are connected to a first axis drive motor and a second axis drive motor (not shown). The other umbilical members included in the cable member 16 are laid along an upper arm 30 on the robot mechanism and directed to a forearm 32.

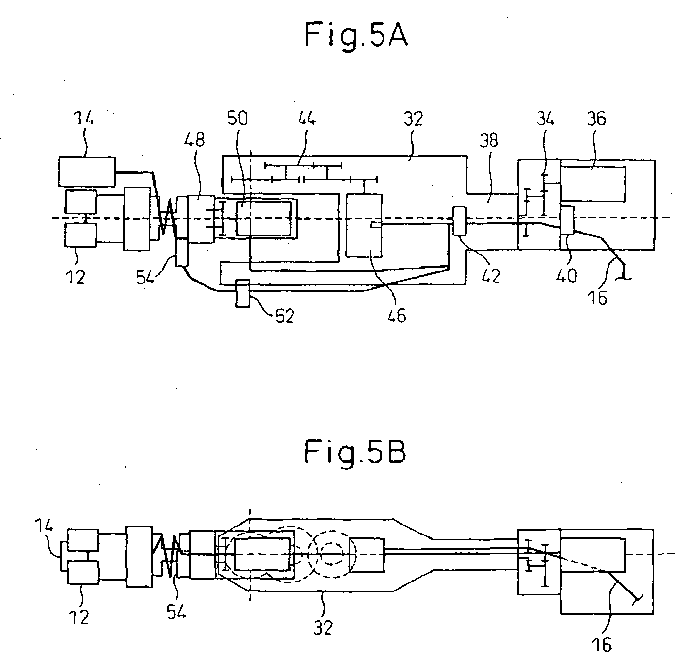

Figs. 5A and 5B typically show the internal structure of the forearm 32 of the robot mechanism 10. In the cable member 16 directed to the forearm 32, cables partially branched from the control cables of the respective axis drive motors are connected to a geared third axis drive motor (or a J3 motor; not shown) and a fourth axis drive motor (or a J4 motor) 36 with a gear 34. The other umbilical members are passed through a cavity 38 inside the forearm 32 having the hollow structure. Around a joint between the forearm 32 and the upper arm 30 (Fig. 3B), a clamp member 40 is provided, and control cables for the J3 motor and the J4 motor are branched from the position of the clamp member 40.

The cable member 16 passed through the cavity 38 inside the forearm 32 is directed to a clamp member 42 provided near the outlet opening of the forearm 32. From the position of the clamp member 42, the control cable for a J5 motor 46 with a gear 44 and the control cable for a J6 motor 50 with a reduction gear 48 are branched. The other umbilical members of the cable member 16 (i.e., the sensor cable for visual sensor 14 (or force sensor), the control cable for the hand 12, etc.) extend to the outside of the forearm 32 through one side face of the front of the forearm 32 to be laid along the outer surface of the forearm 32, are passed through a clamp member 52, and are directed to an end-effector mount surface 54 with a certain surplus length being given.

The cable member 16 directed to the end-effector mount surface 54 is laid in such a manner as to entwine around a wrist member by using a space provided for giving a relative offset between the visual sensor 14 (or force sensor) and the hand 12. Finally, the sensor cable in the cable member 16 is connected to the visual sensor 14 (or force sensor) attached to the end-effector mount surface 44.

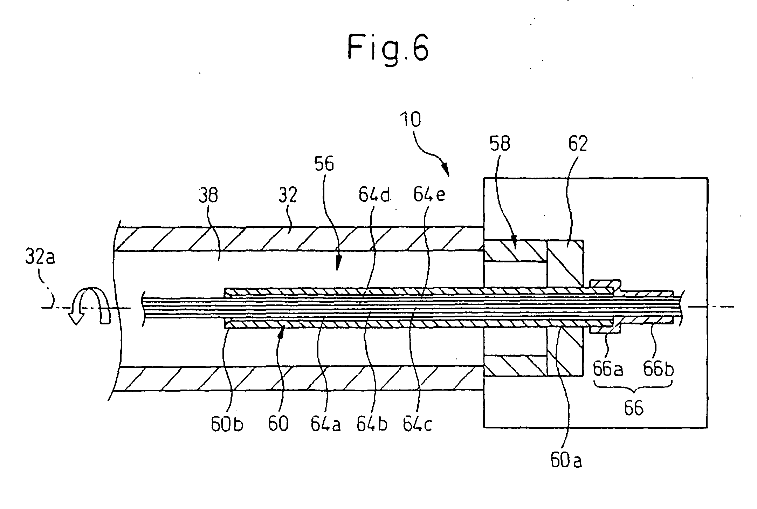

In the robot mechanism 10 as described above, when the forearm 32 operates a twisting or revolute motion, the cable member 16 passed through the forearm 32 is repeatedly subjected to a bending and twisting action around the center of rotation, so that, unless any structural measure is made to the cable distribution and support equipment, the life of the cable and other umbilical members is shortened and the operation of the robot will be hindered. Therefore, the sensor cable distribution and support equipment, according to the present invention, is designed in such a manner that a protective tube is provided to house the sensor cable for the visual sensor or force sensor together with the umbilical members including at least one of the control cable for the drive motor of the robot wrist axis, the control cable for the hand, and the pneumatic-mechanism driving compressed-air hose, and that the protective tube is laid through the cavity of the forearm. This configuration will be explained with reference to Fig. 6, in relation to the above robot mechanism 10.

As shown in Fig. 6, cable distribution and support equipment 56 for a sensor, according to an embodiment of the present invention, is designed to arrange a protective tube 60 having a substantially circular cross-section in the cavity 38 of the forearm 32 supported on a forearm support 58 provided in the robot mechanism 10. The protective tube 60 is provided with a cantilever structure having a fixed end (a right end, in the drawing) 60a at a proximal side, adapted to be securely joined to the forearm support 58, and a free end (a left end, in the drawing) 60b adapted to be arranged in the cavity 38 of the forearm 32. A protective tube support 62 is provided to be formed integrally with the forearm support 58, or to be fabricated separately and fixed by a suitable fastening means to the forearm support 58. The protective tube 60 is supported in a cantilever fashion along the axis of rotation 32a of the forearm 32 by the protective tube support 62.

The umbilical members 64a to 64e, including the sensor cable for the visual sensor 14 (or force sensor), the control cable for the drive motor of the wrist axis, the control cable for the hand 12, the pneumatic-mechanism driving compressed-air hose, and others, in the above-described cable member 16, are passed through the protective tube 60. Note that, although the five umbilical members 64a to 64e are shown in the drawing for facilitating illustration, the actual total number of umbilical members, passed through the protective tube 60, may be in the order from a few to one-hundred, or may be in some cases even more than that.

The protective tube 60 is preferably fabricated from a material, such as a fluororesin (e.g., Teflon®), having a small sliding friction against the umbilical members, so that part of the umbilical members 64a to 64e passed through the tube 60 (e.g., the umbilical members 64a and 64e) will not come into contact with the inside surface of the tube 60 and thus will be damaged. Further, it is preferred that the protective tube 60 has a rigidity such that the free end 60b will not contact the inside wall surface of the forearm 32 irrespective of the cantilever structure of the tube 60, while has a flexibility such that the umbilical members 64a to 64e housed inside the tube 60 will not be subjected to a excess stress. Moreover, it is possible to round or chamfer the inner peripheral edge of the opening of the free end 60b of the protective tube 60, so as to reduce the contact pressure between the open edge and the umbilical members and thereby to prevent the umbilical members from being damaged.

Also, during the twisting or revolute motion of the forearm 32, in order to prevent the umbilical members passed through the protective tube 60 (e.g., the sensor cable and the air hose) from being entangled with each other and being damaged, the inside diameter of the protective tube 60 is preferably a dimension maintaining a suitable clearance from the bundle of the umbilical members 64a to 64e housed in the tube 60. In the illustrated embodiment, a cylindrical positioning member 66 having a large diameter part 66a and a small diameter part 66b is utilized to secure such a suitable clearance. More specifically, the umbilical members 64a to 64e are bundled and restrained by the small diameter part 66b, and the large diameter part 66a is fit over the exposed outer circumference of the fixed end 60a of the protective tube 60, so as to maintain the clearance between the umbilical members 64a to 64e and the inner circumference of the protective tube 60.

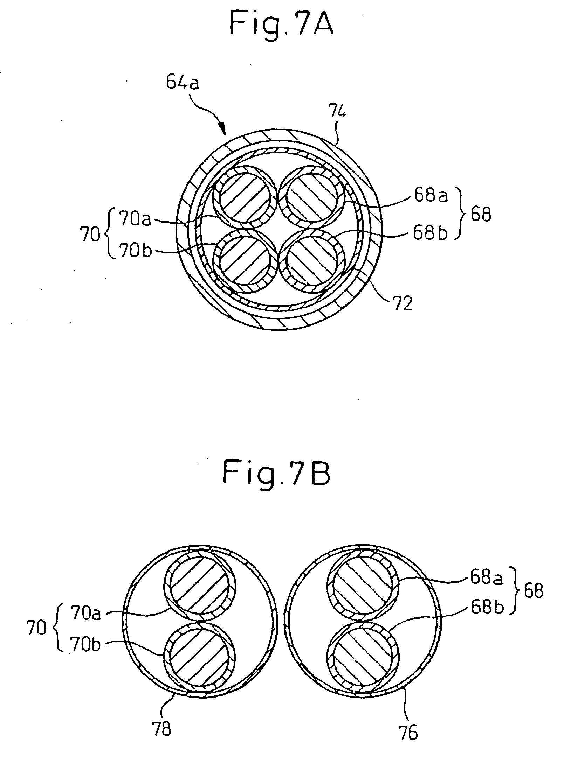

The sensor cable (denoted by, e.g., 64a) for the visual sensor 14 (or the force sensor), passed through the protective tube 60, may be comprised of a composite cable. In this case, the sensor cable is structured in such a manner that the image signal cable and control signal cable for the visual sensor 14 (or the detection-data transmission signal cable for the force sensor) and the power cable for the visual sensor 14 (or the force sensor) are covered together by a shield member, the outside of which is further covered by a sheath member. One example of the sensor cable as such a composite cable will be explained with reference to Figs. 7A and 7B.

In the example of Fig. 7A, the sensor cable 64a for the visual sensor 14 (or the force sensor) is structured in such a manner that a twisted-pair signal cable 68 (comprised of signal wires 68a and 68b) for the image signal and control signal (or for the detection-data transmission) and a power cable 70 (comprised of power feed wires 70a and 70b) are covered together by a shield 72, the outside of which is further covered by a sheath 74. Instead of the twisted-pair signal cable 68, it is also possible to use a coaxial signal cable.

On the other hand, in the example shown in Fig. 7B, the sensor cable for the visual sensor 14 (or the force sensor) is structured in such a manner that a twisted-pair signal cable 68 (comprised of single wires 68a and 68b) for the image signal and control signal (or for the detection-data transmission) and a power cable 70 (comprised of power feed wires 70a and 70b) are respectively covered individually by shields 76 and 78. Note that, in each of the above examples, at the portion housed in the protective tube 60, it is also possible to remove at least one of the shields 72, 76 and 78 and the sheath 74 in at least one of the twisted-pair signal cable 68 and the power cable 70.

Thus, in the case where the sensor cable is passed together with the other umbilical members through the protective tube 60, it is advantageous that at least one of the control cable for the drive motor of the wrist axis and the control cable of the hand 12 is passed through the protective tube 60 in the form of individual wires with no sheath members, from the viewpoint of making a cable bundle more compact and reducing the region occupied by it.

However, in this arrangement, in the general configuration where the sensor cable is covered by the sheath 74, the control cable is liable to be damaged by a rubbing caused between the control cable and the sheath 74. Therefore, for the insulating material of the individual wire forming the control cable, it is advantageous to use a material, such as Teflon®, containing an organic fluorine compound. According to this configuration, the lubrication between the umbilical members is improved and the damage to the umbilical members (in particular, the control cables) is effectively suppressed.

In the above embodiment, the sensor was explained as being either of a visual sensor or a force sensor, but these sensors may also be simultaneously attached to the region near the wrist of the robot. In this arrangement, it is also possible to use cable distribution and support equipment for a sensor, similar to the above-described distribution and support equipment 56, to lay the sensor cables for the sensors inside the forearm 32.

As will be apparent from the above description, according to the present invention, a sensor cable for a visual sensor or a force sensor can be readily laid inside a forearm of a robot, so that the interference between the sensor cable and the peripheral mechanism surrounding the forearm, in the operational space of the robot, can be avoided. In this connection, if laying the sensor cable spirally around the outer circumference of the protective tube, the outside diameter of the cable bundle including the sensor cable would become larger, so that the inside diameters of the cavities of the forearm and the forearm support might have to be enlarged. Further, with this configuration, when the forearm operates in twisting or revolute motion in a direction untwisting the sensor cable, the sensor cable which had been spirally wound will loosen and flare outward, so that it may be required to further cover the sensor cable by another protective tube, in order to keep the sensor cable from being damaged due to the contact with a forearm inside wall. As opposed to this, in the present invention, the sensor cable is passed through a protective tube together with the other umbilical members such as the control cables, so that it is possible to arrange the protective tube spatially efficiently in the cavity inside the forearm of the robot, and thus that there is no longer a need to enlarge the cavities of the forearm and forearm support in order to pass the sensor cable therethrough. Further, in the robot system using the sensor cable distribution and support equipment according to the present invention, it is possible to solve the problem of interference between the sensor cable and the peripheral mechanism surrounding the forearm in the operational space of the robot.

While the invention has been described with reference to specific preferred embodiments, it will be understood by those skilled in the art that various changes and modifications may be made thereto without departing from the scope of the following claims.

## Claims

1. A robot system comprising a robot having a hollow forearm (32) supported by a forearm support (58), and a cable distribution and support equipment (56) for a sensor, having:
a sensor cable (64a) comprising a signal cable (68) and a power cable (70);
an umbilical member (64b-64e) comprising at least one of a control cable of a drive motor of a wrist axis of a robot, a control cable of a hand attached to the robot and a pneumatic-mechanism driving compressed-air hose; and
a protective tube (60) through which said sensor cable (64a) and said umbilical member (64b-64e) are passed;
wherein said protective tube (60) is laid through a cavity (38) formed in the hollow forearm (32) of the robot, and wherein said protective tube (60) is provided with a cantilever structure having a fixed end (60a) securely joined to the forearm support (58) and a free end (60b) disposed in the cavity (38) of the forearm (32).

2. Robot system as set forth in claim 1, wherein said signal cable (68) comprises an image signal cable and a control signal cable, provided for a visual sensor.

3. Robot system as set forth in claim 2, wherein at least one of said image signal cable, said control signal cable and said power cable is covered by at least one of a shield member (72) and a sheath member (74).

4. Robot system as set forth in claim 1, wherein said signal cable (68) comprises a detection-data transmission signal cable of a strain gauge provided for a force sensor.

5. Robot system as set forth in claim 4, wherein at least one of said. detection-data transmission signal cable and said power cable is covered by at least one of a shield member (72) and a sheath member (74).

6. Robot system as set forth in claim 1, wherein, among said umbilical member, at least one of said control cable of the drive motor and said control cable of the hand is provided with no sheath member; and wherein an insulating member of an individual wire constituting said at least one control cable is formed from a material containing an organic fluorine compound.

## Patentansprüche

1. Robotersystem, aufweisend einen Roboter mit einem hohlen Unterarm (32), der von einem Unterarmträger (58) getragen wird, und eine Kabelverteilungs- und Stützausrüstung (56) für einen Sensor, aufweisend:
ein Sensorkabel (64a), aufweisend ein Signalkabel (68) und ein Stromkabel (70);
ein Versorgungselement (64b - 64e), aufweisend ein Steuerkabel eines Antriebsmotors einer Handgelenkachse eines Roboters, ein Steuerkabel einer am Roboter angebrachten Hand und / oder einen einen pneumatischen Mechanismus antreibenden Druckluftschlauch; und
einen Schutzschlauch (60), durch welchen das Sensorkabel (64a) und das Versorgungselement (64b - 64e) laufen;
wobei der Schutzschlauch (60) durch einen Hohlraum (38) geführt wird, der in dem hohlen Unterarm (32) des Roboters ausgebildet ist, und wobei der Schutzschlauch (60) mit einer Auslegerstruktur versehen ist, die ein festes Ende (60a) aufweist, welches am Unterarmträger (58) fest angebracht ist, als auch ein freies Ende (60b), welches im Hohlraum (38) des Unterarms (32) angeordnet ist.

2. Robotersystem nach Anspruch 1, bei dem das Signalkabel (68) ein Bildsignalkabel und ein Steuersignalkabel aufweist, die für einen optischen Sensor vorgesehen sind.

3. Robotersystem nach Anspruch 2, bei dem das Bildsignalkabel, das Steuersignalkabel und / oder das Stromkabel durch ein Abschirmungselement (72) und / oder ein Umhüllungselement (74) abgedeckt ist.

4. Robotersystem nach Anspruch 1, bei dem das Signalkabel (68) ein Erfassungsdatenübertragungssignalkabel eines Dehnmessstreifens aufweist, das für einen Kraftsensor vorgesehen ist.

5. Robotersystem nach Anspruch 4, bei dem das Erfassungsdatenübertragungssignalkabel und / oder das Stromkabel durch ein Abschirmungselement (72) und / oder ein Umhüllungselement (74) abgedeckt ist.

6. Robotersystem nach Anspruch 1, bei dem vom Versorgungselement das Steuerkabel des Antriebsmotors und / oder das Steuerkabel der Hand nicht mit einem Hüllelement versehen ist; und bei dem ein Isolierelement eines einzelnen Drahtes, der das zumindest eine Steuerkabel darstellt, aus einem Material gebildet ist, welches eine organische Fluorverbindung enthält.

## Revendications

1. Système de robot comprenant un robot ayant un avant-bras (32) creux supporté par un support (58) d'avant-bras, et un équipement (56) de distribution et de support de câble pour un capteur, ayant :
un câble de capteur (64a) comprenant un câble de signaux (68) et un câble d'alimentation (70) ;
un élément ombilical (64b-64e) comprenant au moins l'un d'un câble de commande d'un moteur d'entraînement d'un axe de poignet d'un robot, d'un câble de commande d'une main fixée au robot et d'un tuyau d'air comprimé d'entraînement d'un mécanisme pneumatique ; et
un tube de protection (60) à travers lequel ledit câble de capteur (64a) et ledit élément ombilical (64b-64e) sont passés ;
dans lequel ledit tube de protection (60) est disposé à travers une cavité (38) formée dans l'avant-bras (32) creux du robot, et dans lequel ledit tube de protection (60) est prévu avec une structure en porte-à-faux ayant une extrémité fixe (60a) solidement attachée au support (58) d'avant-bras et une extrémité libre (60b) disposée dans la cavité (38) de l'avant-bras (32).

2. Système de robot selon la revendication 1, dans lequel ledit câble de signaux (68) comprend un câble de signaux d'images et un câble de signaux de commande, prévus pour un capteur visuel.

3. Système de robot selon la revendication 2, dans lequel au moins l'un dudit câble de signaux d'images, dudit câble de signaux de commande et dudit câble d'alimentation est recouvert par au moins l'un d'un élément de blindage (72) et d'un élément de gaine (74).

4. Système de robot selon la revendication 1, dans lequel ledit câble de signaux (68) comprend un câble de signaux de transmission de données de détection d'un extensomètre prévu pour un capteur de force.

5. Système de robot selon la revendication 4, dans lequel au moins l'un dudit câble de signaux de transmission de données de détection et dudit câble d'alimentation est recouvert par au moins l'un d'un élément de blindage (72) et d'un élément de gaine (74).

6. Système de robot selon la revendication 1, dans lequel, parmi ledit élément ombilical, au moins l'un dudit câble de commande du moteur d'entraînement et dudit câble de commande de la main est prévu sans élément de gaine ; et dans lequel un élément d'isolation d'un fil individuel constituant ledit au moins un câble de commande est formé d'un matériau contenant un composé organique fluoré.
